# EUROPÄISCHE PATENTSCHRIFT

(11) **EP 1 825 581 B1**
(45) Veröffentlichungstag und Bekanntmachung des Hinweises auf die Patenterteilung: **14.05.2008**
(21) Anmeldenummer: 05826367.4
(22) Anmeldetag: 13.12.2005
(51) Int. Cl.: H02B 1/20

(54) **SCHALTANLAGE**
SWITCHGEAR
INSTALLATION DE DISTRIBUTION

(30) Priorität: 17.12.2004 DE 102004062169
(43) Veröffentlichungstag der Anmeldung: 29.08.2007
(73) Patentinhaber: SIEMENS AKTIENGESELLSCHAFT, 80333 München (DE)
(72) Erfinder: KOSCHMIEDER, Heiko, 06237 Leuna (DE); OBENAUS, Sven, 06279 Farnstädt (DE)
(86) Internationale Anmeldenummer: PCT/EP2005/056729
(87) Internationale Veröffentlichungsnummer: WO 2006/063993

(56) Entgegenhaltungen:
- DE-A1- 4 210 657

## Beschreibung

Die Erfindung liegt auf dem Gebiet der Schaltanordnungen für die Abgabe oder Verteilung elektrischer Energie und betrifft eine Schaltanlage mit zumindest zwei modularen Funktionseinheiten für Funktionsabgänge, die jeweils mit einem eine Anschlussleitung aufweisenden, kommunikationsfähigen Feldgerät zur Kommunikation mit einer Feldbuslinie versehen sind.

Insbesondere bei hochverfügbaren Schaltanlagen muss jede der Funktionseinheiten im laufenden Betrieb, ohne Beeinträchtigung der anderen Funktionseinheiten bzw. Funktionsabgänge austauschbar sein.

Bei einer gattungsgemäßen Schaltanlage, wie sie aus der Druckschrift DE 42 10 657 C2 bekannt ist, sind die kommunikationsfähigen Feldgeräte in Form von Kommunikationsmodulen in einfacher Linientopologie an eine Feldbuslinie in Form einer Busleitung gekoppelt. Um eine Unterbrechung der Feldbuslinie beim Austausch einer modularen Funktionseinheit zu vermeiden erfolgt die Kopplung der Funktionseinheiten mit der Feldbuslinie über Anschlussleitungen in Form von Stichleitungen. Der Einsatz dieser Stichleitungen führt aber auf Grund von Signalreflexionen bei hohen Datenübertragungsraten zu Kommunikationsstörungen und -Ausfällen.

Ausgehend von einer Schaltanlage nach dem Oberbegriff des Patentanspruches 1 (DE 42 10 657 C2) liegt der Erfindung die Aufgabe zugrunde, die Verdrahtung der Schaltanlage zu vereinfachen.

Diese Aufgabe wird gemäß der Erfindung dadurch gelöst, dass zur Ankopplung der kommunikationsfähigen Feldgeräte der zumindest zwei modularen Funktionseinheiten an die Feldbuslinie ein gemeinsames Busmodul vorgesehen ist, wobei das Busmodul zum Anschluss jeder der Anschlussleitungen der einzelnen kommunikationsfähigen Feldgeräte an das Busmodul jeweils eine separate Geräteanschaltungen, zum Anschluss der Feldbuslinie an das Busmodul eine Feldbusanschaltung und zur galvanisch getrennten Kopplung jeder der Geräteanschaltungen mit der Feldbusanschaltung jeweils einen zwischen der Geräteanschaltung und der Feldbusanschaltung angeordneten separaten, mit einer Repeater-Schaltung versehenen Kopplungskanal aufweist.

An sich sind als "aktive Stichleitungen" bezeichnete Stichleitungen bekannt, in die eine Repeater-Schaltung integriert ist und die eine Übertragungsrate von bis zu 12 MBit/s aufweisen. Derartige aktive Stichleitungen werden beispielsweise unter der Abkürzung "ASTL" von der Firma Indu-Sol GmbH, Deutschland angeboten (http://www.indu-sol.com/opencms/export/indusol/hp/produkte/infrastrukturkomponenten/).

An sich sind aus der Computertechnik weiterhin Schnittstellenwandler bekannt, die über einen RS-485 Eingangskanal und drei RS-485 Ausgangskanäle verfügen. Diese bekannten Schnittstellenwandler sind jedoch aufgrund ihrer geringen Übertragungsrate zum Einsatz als Busmodul in einer erfindungsgemäßen Schaltanlage weder vorgesehen noch geeignet (http://www.spectra.de).

Eine bevorzugte Ausgestaltung der neuen Schaltanlage sieht vor, dass das Busmodul mehr als zwei separate Geräteanschaltungen aufweist.

In weiterer bevorzugter Ausgestaltung ist vorgesehen, dass zur Ankopplung der kommunikationsfähigen Feldgeräte von mehr als zwei modularen Funktionseinheiten an die Feldbuslinie eine Kombination aus zumindest zwei Busmodulen vorgesehen ist, wobei jedes der zumindest zwei Busmodule zwei oder mehr Geräteanschaltungen aufweist. - Bei entsprechender Kombination ist der Anschluss einer beliebigen Anzahl von modularen Funktionseinheiten auf einfache Weise möglich.

Vorteilhaft ist es, wenn der Datenaustausch über die Anschlussleitungen und die Feldbuslinie nach dem Übertragungsstandart RS485 - insbesondere mit einer für das bekannte Feldbussystem Profibus-DP üblichen Übertragungsrate von mehr als 500 kBit/s erfolgt.

Weitere vorteilhafte Ausgestaltung der neuen Schaltanlage sehen vor, dass das das Busmodul in einem Raum außerhalb des Funktionsraumes eines Schaltfeldes der Schaltanlage - insbesondere an einer Hutschiene - angeordnet ist. Dabei versteht der Fachmann unter Funktionsraum den Bauraum in einer Schaltanlage, der zur Unterbringung der modularen Funktionseinheiten dient.

Zum Berührungs- und Fremdkörperschutz bzw. zum Wasserschutz ist in einer weiteren bevorzugten Ausgestaltung vorgesehen, dass alle separaten, mit einer Repeater-Schaltung versehenen Kopplungskanäle eines Busmoduls in einem gemeinsamen Gehäuse angeordnet sind.

Weiterhin ist vorgesehen, dass die Geräteanschaltungen und die Feldbusanschaltung eines Busmoduls als vom Gehäuse abnehmbare Steckersystem-Komponenten ausgebildet sind, um das Busmodul noch montagefreundlicher und leichter verdrahtbar zu gestalten.

Die Erfindung wird im Folgenden anhand der Figuren 1 bis 5 näher erläutert. Dabei zeigen,
- Figur 1: eine aus der bisherigen Praxis bekannte Niederspannungs-Schaltanlage mit aktiven Stichleitungen,
- Figur 2: eine erfindungsgemäße Schaltanlage in Form einer Niederspannungs-Schaltanlage mit einem Busmodul
- Figur 3: das Busmodul gemäß der Figur 2 und
- Figuren 4 und 5: bevorzugte Ausgestaltungen des erfindungsgemäßen Busmoduls.

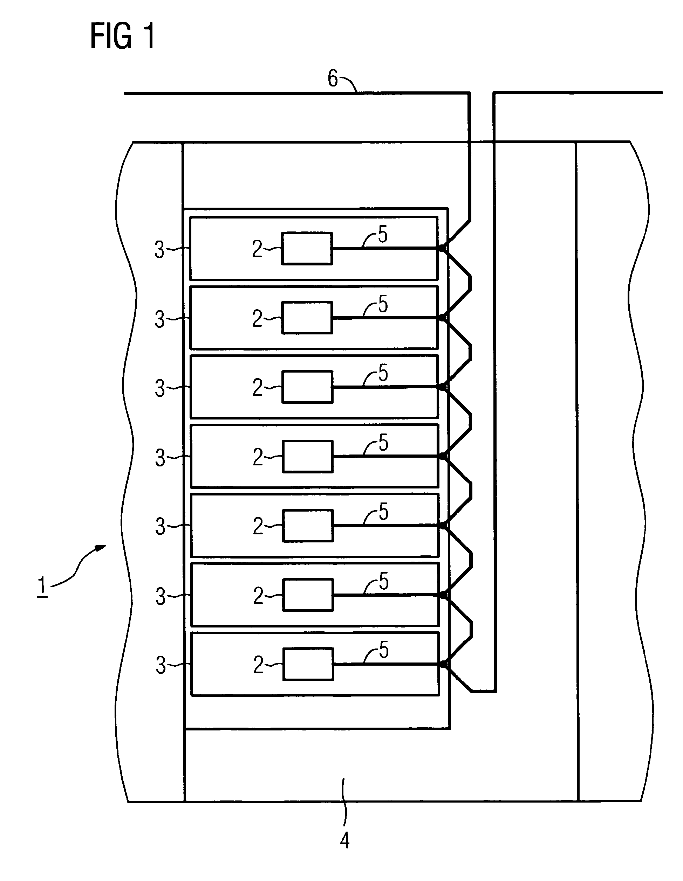

Gemäß der Figur 1 sind in bisher in der Praxis üblichen Schaltanlagen 1, in denen mehrere mit kommunikationsfähigen Feldgeräten 2 ausgestattete modulare Funktionseinheiten 3 in einem Schaltfeld 4 angeordnet sind, die kommunikationsfähigen Feldgeräte 2 mit Anschlussleitungen in Form von Stichleitungen 5 versehen. Über diese Stichleitungen 5 sind die kommunikationsfähigen Feldgeräte 2 an eine in einfacher Linientopologie ausgeführte Feldbuslinien 6 angeschlossen.

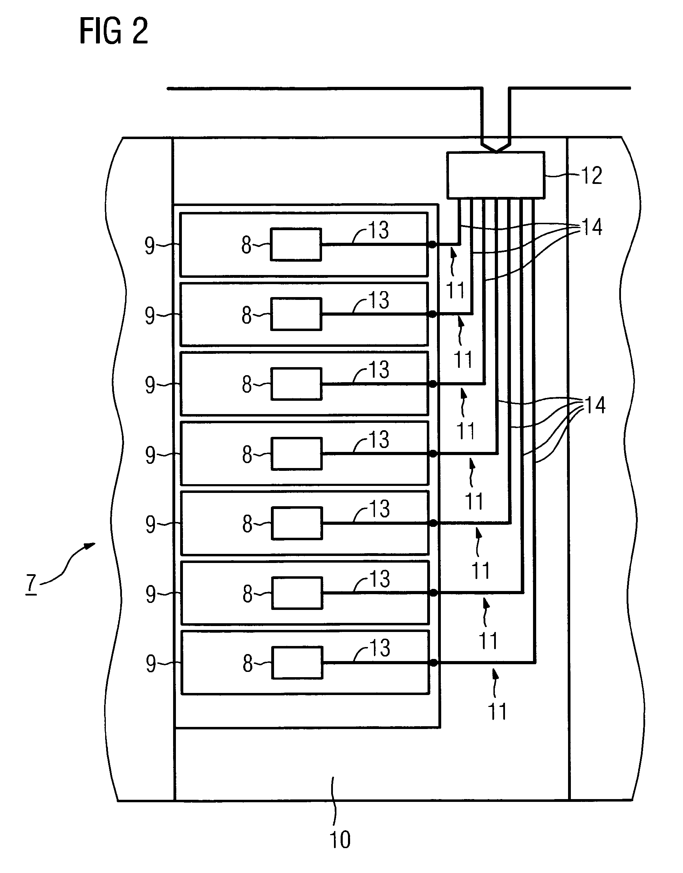

Gemäß der Figur 2 ist bei der erfindungsgemäßen Schaltanlage 7 in Form einer hochverfügbaren Niederspannungs-Schaltanlage vorgesehen, dass der Anschluss der kommunikationsfähigen Feldgeräte 8 der modularen Funktionseinheiten 9 eines Schaltfeldes 10 frei von Stichleitungen erfolgt. Hierzu ist jedes der kommunikationsfähigen Feldgeräte 8 über jeweils eine aus zwei Abschnitten bestehende Anschlussleitung 11 an ein Busmodul 12 gekoppelt. Dabei erstreckt sich ein erster Abschnitt 13 der Anschlussleitung 11 innerhalb der modularen Funktionseinheiten 9 und ein zweiter Abschnitt 14 der Anschlussleitungen 11 zwischen der modularen Funktionseinheit 9 und dem Busmodul 12. Der erste Abschnitt 13 ist einseitig mit einer in den Figuren nicht gezeigten neunpoligen D-SUB-Steckersystem-Komponente in Form eines Steckers und einem Anpasswiderstand konfektioniert. Seine Länge beträgt etwa 1 Meter. Der zweite Abschnitt 14 ist einseitig mit einer ersten RJ45- Steckersystem-Komponente 15 in Form eines Steckers konfektioniert. Dieser zweite Abschnitt 14 weißt eine Länge von ca. 2,5 Metern auf.

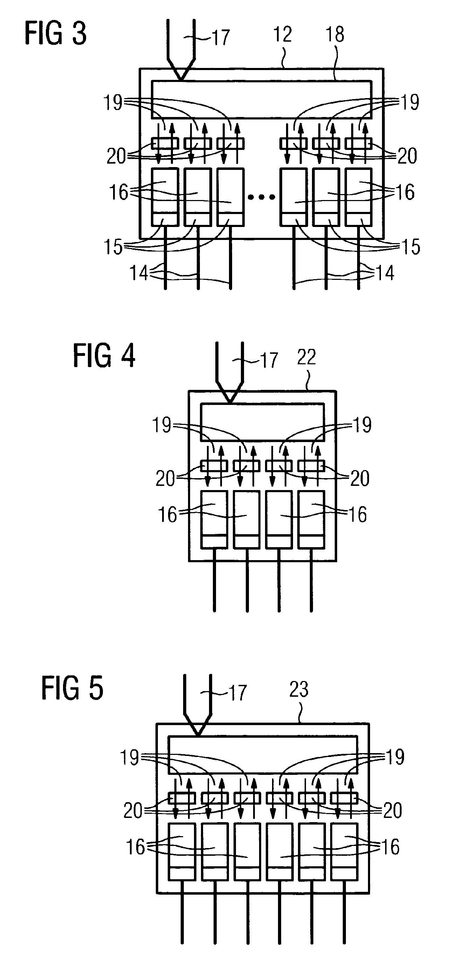

Gemäß der Figur 3 weißt das Busmodul 12 zum Anschluss der einzelnen kommunikationsfähigen Feldgeräte 8 an das Busmodul 12 mehrere separate Geräteanschaltungen 16 in Form von zweiten, als Buchsen ausgebildeten RJ45- Steckersystem-Komponenten auf. Weiterhin weißt das Busmodul 12 zum Anschluss der Feldbuslinie 17 an das Busmodul 12 eine separate Feldbusanschaltung 18 in Form einer 9-poligen als Buchse ausgebildeten D-SUB Steckersystem-Komponente auf. Zur galvanisch getrennten Kopplung jeder der Geräteanschaltungen 16 mit der Feldbusanschaltung 18 ist jeweils zwischen einer der Geräteanschaltungen 16 und der Feldbusanschaltung 18 ein separater Kopplungskanal 19 vorgesehen, wobei jeder der Kopplungskanäle 19 mit einer an sich bekannten Repeater-Schaltung 20 versehen ist.

Da es in der Praxis üblich ist, die Schaltfelder 21 von Niederspannungs-Schaltanlagen mit einer variablen insbesondere geraden Anzahl von mehr als zwei anzuschließenden modularen Funktionseinheiten zu versehen, ist gemäß der Figuren 4 und 5 in bevorzugter Ausgestaltung vorgesehen, dass das Busmodul 22 bzw. 23 vier oder sechs separate Geräteanschaltungen 16 aufweist. Damit sind an das Busmodul 22 bzw. 23 bis zu vier bzw. bis zu sechs modulare Funktionseinheiten 9 anschließbar. Mit diesen beiden Varianten des Busmoduls (4-fach bzw. 6-fach) kann durch entsprechende Kombination die Ankopplung jeder in der Praxis üblichen Anzahl von modularen Funktionseinheiten 9 an die Feldbuslinie 17 verwirklicht werden.

Das Busmodul unterliegt aufgrund seiner Verwendung innerhalb der Niederspannungs-Schaltanlage besonderen Umgebungsbedingungen und muss daher besonderen Anforderungen hinsichtlich seines Erwärmungsverhaltens, seiner Betriebs- und Personensicherheit sowie des seines Verhaltens in seiner elektrischen Umgebung gerecht werden. Daher ist es vorteilhaft, dass alle Komponenten des Busmoduls - insbesondere die separaten, mit der Repeater-Schaltung versehenen Kopplungskanäle 19 - in einem gemeinsamen Gehäuse 24 untergebracht sind. Die Montage des Busmoduls 12, 22, 23 erfolgt innerhalb des Niederspannungs-Schaltfeldes in einem in den Figuren nicht dargestellten Kabelanschlussraum oder in einem ebenfalls nicht dargestellten Verdrahtungsraum und zwar außerhalb des Funktionsraumes der Schaltfelder der Schaltanlage.

Da die Geräteanschaltungen 16 und die Feldbusanschaltung 18 in Form von abnehmbaren Steckersystem-Komponenten ausgebildet sind, ist das Busmodul 12, 22, 23 leicht montierbar und verdrahtbar. Durch die stehende Verdrahtung in Form der Anschlussleitungen 11 wird zusätzlich die Wartung bzw. der Austausch des Busmoduls 12, 22, 23 unterstützt.

Die Repeater-Schaltungen 20innerhalb der Koppelkanäle 19 trennen die Feldbuslinie 17und die Anschlussleitungen in bekannter Weise galvanisch und gewährleisten somit einen sicheren Betrieb ohne Begrenzung der Übertragungsgeschwindigkeit. Damit ist ein Austausch von modularen Funktionseinheiten 9 im laufenden Betrieb ohne Beeinträchtigung anderer Funktionseinheiten möglich. Als Versorgungsspannung der einzelnen Repeater-Schaltungen 20 kann insbesondere eine externe Steuerspannung vorgesehen sein.

## Patentansprüche

1. Schaltanlage (7) mit zumindest zwei modularen Funktionseinheiten (9), die jeweils mit einem eine Anschlussleitung (11) aufweisenden, kommunikationsfähigen Feldgerät (8) zur Kommunikation mit einer Feldbuslinie (17) versehen sind,
**dadurch gekennzeichnet, dass** zur Ankopplung der kommunikationsfähigen Feldgeräte (8) der zumindest zwei modularen Funktionseinheiten (9) an die Feldbuslinie (17) ein gemeinsames Busmodul (12; 22; 23) vorgesehen ist,
wobei das Busmodul (12; 22; 23) zum Anschluss der Anschlussleitungen (11) der einzelnen kommunikationsfähigen Feldgeräte (8) an das Busmodul (12; 22; 23) jeweils eine separate Geräteanschaltung (16), zum Anschluss der Feldbuslinie (17) an das Busmodul (12; 22; 23) eine Feldbusanschaltung (18) und zur galvanisch getrennten Kopplung jeder der Geräteanschaltungen (16) mit der Feldbusanschaltung (18) jeweils einen zwischen der Geräteanschaltung (16) und der Feldbusanschaltung (18) angeordneten, separaten, mit einer Repeater-Schaltung (20) versehenen Kopplungskanal (19) aufweist.

2. Schaltanlage nach Anspruch 1,
**dadurch gekennzeichnet, dass** das Busmodul (22; 23) mehr als zwei separate Geräteanschaltungen (16) aufweist.

3. Schaltanlage nach Anspruch 1,
**dadurch gekennzeichnet, dass** zur Ankopplung der kommunikationsfähigen Feldgeräte (8) von mehr als zwei modularen Funktionseinheiten (9) an die Feldbuslinie (17) eine Kombination aus zumindest zwei Busmodulen (22, 22; 23, 23; 22, 23) vorgesehen ist, wobei jedes der zumindest zwei Busmodule zwei oder mehr Geräteanschaltungen aufweist.

4. Schaltanlage nach einem der vorhergehenden Ansprüche,
**dadurch gekennzeichnet, dass** die Übertragungsrate des Busmoduls (12; 22; 23) größer als 500 kBit/s ist.

5. Schaltanlage nach einem der vorhergehenden Ansprüche,
**dadurch gekennzeichnet, dass** der Datenaustausch über die Anschlussleitungen (11) und die Feldbuslinie (17) nach dem Übertragungsstandart RS485 erfolgt.

6. Schaltanlage nach einem der vorhergehenden Ansprüche,
**dadurch gekennzeichnet, dass** das das Busmodul (12; 22; 23) in einem Raum außerhalb des Funktionsraumes eines Schaltfeldes (21) der Schaltanlage angeordnet ist.

7. Schaltanlage nach einem der vorhergehenden Ansprüche,
**dadurch gekennzeichnet, dass** Das Busmodul (12; 22; 23) auf einer Hutschiene montierbar ist.

8. Schaltanlage nach einem der vorhergehenden Ansprüche,
**dadurch gekennzeichnet, dass** alle separaten, mit der Repeater-Schaltung (20) versehenen Kopplungskanäle eines Busmoduls (12; 22; 23) in einem gemeinsamen Gehäuse (24) angeordnet sind.

9. Schaltanlage nach Anspruch 9,
**dadurch gekennzeichnet, dass** die Geräteanschaltungen (16) und die Feldbusanschaltung (18) als vom Gehäuse (24) abnehmbare Steckersystem-Komponenten ausgebildet sind.

## Claims

1. Switchgear assembly (7) having at least two modular functional units (9), which are each provided with a field device (8), which has a connecting line (11) and is capable of communication, for the purpose of communicating with a field bus line (17), **characterized in that**, in order to couple the field devices (8), which are capable of communication, of the at least two modular functional units (9) to the field bus line (17), a common bus module (12; 22; 23) is provided, the bus module (12; 22; 23) having in each case one separate device interface (16) for connecting the connecting lines (11) of the individual field devices (8), which are capable of communication, to the bus module (12; 22; 23), a field bus interface (18) for connecting the field bus line (17) to the bus module (12; 22; 23), and in each case one separate coupling channel (19), which is provided with a repeater circuit (20) and is arranged between the device interface (16) and the field bus interface (18), for the DC-isolated coupling of each of the device interfaces (16) with the field bus interface (18).

2. Switchgear assembly according to Claim 1, **characterized in that** the bus module (22; 23) has more than two separate device interfaces (16).

3. Switchgear assembly according to Claim 1, **characterized in that** a combination of at least two bus modules (22, 22; 23, 23; 22, 23) is provided for coupling the field devices (8), which are capable of communication, of more than two modular functional units (9) to the field bus line (17), each of the at least two bus modules having two or more device interfaces.

4. Switchgear assembly according to one of the preceding claims, **characterized in that** the transmission rate of the bus module (12; 22; 23) is greater than 500 kbit/s.

5. Switchgear assembly according to one of the preceding claims, **characterized in that** the data interchange takes place via the connecting lines (11) and the field bus line (17) in accordance with the transmission standard RS485.

6. Switchgear assembly according to one of the preceding claims, **characterized in that** the bus module (12; 22; 23) is arranged in a space outside the functional space of a switchpanel (21) of the switchgear assembly.

7. Switchgear assembly according to one of the preceding claims, **characterized in that** the bus module (12; 22; 23) can be mounted on a top-hat rail.

8. Switchgear assembly according to one of the preceding claims, **characterized in that** all of the separate coupling channels, which are provided with the repeater circuit (20), of a bus module (12; 22; 23) are arranged in a common housing (24).

9. Switchgear assembly according to Claim 9, **characterized in that** the device interfaces (16) and the field bus interface (18) are in the form of plug system components which can be removed from the housing (24).

## Revendications

1. Installation de distribution (7) ayant au moins deux unités fonctionnelles modulaires (9) qui sont munies chacune d'un appareil de terrain (8) comportant une ligne de raccordement (11), capable de communiquer et destiné à la communication avec une ligne de bus de terrain (17),
**caractérisée par le fait que**, pour le raccordement des appareils de terrain capables de communiquer (8) des au moins deux unités fonctionnelles modulaires (9) à la ligne de bus de terrain (17), il est prévu un module de bus commun (12 ; 22 ; 23),
le module de bus (12 ; 22 ; 23) comportant respectivement une connexion d'appareil séparée (16) pour le raccordement des lignes de raccordement (11) des différents appareils de terrain capables de communiquer (8) au module de bus (12 ; 22 ; 23), une connexion de bus de terrain (18) pour le raccordement de la ligne de bus de terrain (17) au module de bus (12 ; 22 ; 23) et à chaque fois un canal de couplage (19), placé entre la connexion d'appareil (16) et la connexion de bus de terrain (18), séparé et muni d'un circuit répéteur (20), pour le couplage avec isolation électrique de chacune des connexions d'appareil (16) à la connexion de bus de terrain (18).

2. Installation de distribution selon la revendication 1,
**caractérisée par le fait que** le module de bus (22 ; 23) comporte plus de deux connexions d'appareil (16) séparées.

3. Installation de distribution selon la revendication 1,
**caractérisée par le fait que**, pour le raccordement des appareils de terrain capables de communiquer (8) de plus de deux unités fonctionnelles modulaires (9) à la ligne de bus de terrain (17), il est prévu une combinaison d'au moins deux modules de bus (22, 22 ; 23, 23 ; 22, 23), chacun des au moins deux modules de bus comportant deux ou plus connexions d'appareil.

4. Installation de distribution selon l'une des revendications précédentes,
**caractérisée par le fait que** le taux de transmission du module de bus (12 ; 22 ; 23) est supérieur à 500 kBit/s.

5. Installation de distribution selon l'une des revendications précédentes,
**caractérisée par le fait que** l'échange de données par l'intermédiaire des lignes de raccordement (11) et de la ligne de bus de terrain (17) s'effectue selon le standard de transmission RS485.

6. Installation de distribution selon l'une des revendications précédentes,
**caractérisée par le fait que** le module de bus (12 ; 22 ; 23) est placé dans un espace en dehors de l'espace fonctionnel d'un panneau de couplage (21) de l'installation de distribution.

7. Installation de distribution selon l'une des revendications précédentes,
**caractérisée par le fait que** le module de bus (12 ; 22 ; 23) peut être monté sur un profilé chapeau.

8. Installation de distribution selon l'une des revendications précédentes,
**caractérisée par le fait que** tous les canaux de couplage séparés, munis du circuit répéteur (20), d'un module de bus (12 ; 22 ; 23) sont placés dans un boîtier commun (24).

9. Installation de distribution selon la revendication 8,
**caractérisée par le fait que** les connexions d'appareil (16) et la connexion de bus de terrain (18) sont conçues comme des composants de système connecteur pouvant être enlevés du boîtier (24).
